# FASCICULE DE BREVET EUROPEEN

(11) **EP 3 531 101 B1**
(45) Date de publication et mention de la délivrance du brevet: **26.02.2020**
(21) Numéro de dépôt: 19156843.5
(22) Date de dépôt: 13.02.2019
(51) Int. Cl.: G01M 17/08, G01M 17/10, B61D 15/12

(54) **PROCÉDÉ ET DISPOSITIF D'INSPECTION DE SOUS-CHÂSSIS DE VÉHICULE FERROVIAIRE**
VERFAHREN UND VORRICHTUNG ZUR INSPEKTION DES HILFSRAHMENS EINES SCHIENENFAHRZEUGS
METHOD AND DEVICE FOR INSPECTING SUBFRAMES OF A RAILWAY VEHICLE

(30) Priorité: 22.02.2018 FR 1851511
(43) Date de publication de la demande: 28.08.2019
(73) Titulaire: ALSTOM Transport Technologies, 93400 Saint-Ouen (FR)
(72) Inventeur: BEHETY, Norbert, 67500 HAGUENAU (FR)
(74) Mandataire: Lavoix

(56) Documents cités:
- CN-A- 105 882 683

## Description

La présente invention concerne le domaine des inspections de maintenance qui doivent avoir lieu à intervalles réguliers sur les véhicules ferroviaires, pour garantir leur intégrité et par là, la sécurité des personnes et biens transportés. Ces inspections visuelles réalisées par des opérateurs humains nécessitent l'installation des véhicules sur des voies ferroviaires d'inspection dédiées (rails sur des fosses, rails surélevés ...), ce qui affecte la disponibilité des véhicules, leur occasionne des déplacements spécifiques et contribue à la saturation des infrastructures, tout en imposant aux opérateurs humains des conditions de travail malaisées, et peu favorables en termes de santé et de sécurité. En outre, comme 90% des organes du véhicule inspectés sont déterminés conformes à l'issue de l'inspection, un relâchement de la concentration nécessaire à ces inspections peut être redouté.

CN 105 882 683 A est un document d'antériorité relatif à l'invention qui révèle le préambule des revendications 1 et 6.

Il est nécessaire de proposer une solution d'inspection de véhicule ferroviaire qui soit aisée à mettre en oeuvre et qui permette le pilotage à distance d'un dispositif d'inspection vers les zones à inspecter du véhicule ferroviaire.

A cet effet, suivant un premier aspect, l'invention propose un procédé d'inspection de sous-châssis de véhicule ferroviaire sur une voie ferroviaire à l'aide d'un dispositif d'inspection comprenant un bloc de traitement et un système moteur, ledit bloc de traitement étant adapté pour commander le système moteur et le système moteur étant adapté pour déplacer le dispositif d'inspection jusqu'à le positionner en au moins un point de destination commandé par le bloc de traitement ;
ledit procédé étant caractérisé en ce que, étant donné une liste, mémorisée dans le bloc de traitement, de coordonnées de points d'intérêt du sous-châssis exprimées dans un référentiel ayant comme origine un point de référence, le procédé comprend les étapes suivantes :
- déplacement du dispositif d'inspection jusqu'à un point prédéterminé dont la position par rapport au point de référence est connue ;
- enregistrement, par le bloc de traitement, de la localisation du point de référence en fonction de la position jusqu'à laquelle le dispositif a été déplacé ;
- détermination, par le bloc de traitement, d'au moins une commande destinée au système moteur pour positionner le dispositif d'inspection en au moins un point d'intérêt de la liste en fonction d'au moins les coordonnées dudit point d'intérêt exprimées dans la liste et de ladite localisation du point de référence enregistrée.

L'invention permet ainsi de fournir une solution pour faciliter la rapidité et la fiabilité de l'automatisation des opérations d'inspection. Une fois enregistrée, lors de la maintenance, la position effective du point de référence du véhicule ferroviaire inspecté, le dispositif d'inspection est alors en mesure de déterminer le déplacement optimal nécessaire pour inspecter chaque composant du véhicule ferroviaire. Un autre avantage, lié à la base de référencement des équipements sous châssis pour chaque type de train référencé, est de pouvoir identifier les équipements au voisinage du robot, et les inspections cataloguées pour ces équipements.

L'optimisation des déplacements permet de les réduire et donc de préserver l'énergie (batterie) nécessaire aux déplacements, augmentant ainsi l'autonomie du robot.

Dans des modes de réalisation, le procédé d'inspection suivant l'invention comporte en outre une ou plusieurs des caractéristiques suivantes :
- le bloc de traitement fournit ladite commande déterminée au système moteur, puis, en fonction de ladite commande, le dispositif d'inspection se déplace sous l'action du système moteur jusqu'au point d'intérêt et en capture une image ou y effectue une mesure ;
- le point prédéterminé est un essieu du véhicule ferroviaire mobile, la localisation du point de référence sur un axe X s'étendant parallèlement à la voie étant celle correspondant audit essieu sur l'axe X, la localisation du point de référence sur un axe Y situé dans le plan de la voie et perpendiculaire à des rails de la voie étant déterminée en fonction de la localisation d'au moins un des deux rails sur l'axe Y et la localisation du point de référence sur un axe Z perpendiculaire aux axes X et Y étant déterminée en fonction de la localisation d'au moins un des deux rails sur l'axe Z ;
- les étapes suivantes sont mises en oeuvre :
   - calcul d'une surface correspondant à une enveloppe d'une surface du sous-châssis du véhicule ferroviaire ;
   - détermination de déplacement(s) du dispositif d'inspection à effectuer entre deux points d'intérêt successifs de la liste par la mise en œuvre d'un algorithme de minimisation des déplacements effectués en 1 dimension, 2 dimensions ou 3 dimensions, ladite minimisation étant réalisée en fonction des points de la liste et de l'enveloppe calculée.

Suivant un deuxième aspect, la présente invention propose un programme d'ordinateur comportant des instructions logicielles qui, lorsqu'elles sont exécutées par un ordinateur, mettent en œuvre un procédé tel que défini ci-dessus.

Suivant un troisième aspect, la présente invention propose un dispositif d'inspection de sous-châssis de véhicule ferroviaire sur une voie ferroviaire comprenant un bloc de traitement et un système moteur, ledit bloc de traitement étant adapté pour commander le système moteur et le système moteur étant adapté pour déplacer le dispositif d'inspection jusqu'à le positionner en au moins un point de destination commandé par le bloc de traitement ;
ledit dispositif étant caractérisé en ce que, étant donné une liste, mémorisée dans le bloc de traitement, de coordonnées de points d'intérêt du sous-châssis exprimées dans un référentiel ayant comme origine un point de référence, le bloc de traitement est adapté pour, suite à un déplacement du dispositif d'inspection jusqu'à un point prédéterminé dont la position par rapport au point de référence est connue, enregistrer une localisation du point de référence en fonction de la position jusqu'à laquelle le dispositif a été déplacé ;
le bloc de traitement étant adapté pour déterminer au moins une commande destinée au système moteur pour positionner le dispositif d'inspection en au moins un point d'intérêt de la liste en fonction d'au moins les coordonnées dudit point d'intérêt exprimées dans la liste et de ladite localisation du point de référence enregistrée.

Dans des modes de réalisation, le dispositif d'inspection suivant l'invention comporte en outre une ou plusieurs des caractéristiques suivantes :
- le bloc de traitement est adapté pour fournir ladite commande déterminée au système moteur, puis, en fonction de ladite commande, le dispositif d'inspection est adapté pour se déplacer sous l'action du système moteur jusqu'au point d'intérêt et en capturer une image ou y effectuer une mesure ;
- le point prédéterminé est un essieu du véhicule ferroviaire, la localisation du point de référence sur un axe X s'étendant parallèlement à la voie étant celle correspondant audit essieu sur l'axe X, la localisation du point de référence sur un axe Y situé dans le plan de la voie et perpendiculaire à des rails de la voie étant déterminée en fonction de la localisation d'au moins un des deux rails sur l'axe Y et la localisation du point de référence sur un axe Z perpendiculaire aux axes X et Y étant déterminée en fonction de la localisation d'au moins un des deux rails sur l'axe Z ;
- le bloc de traitement est adapté pour déterminer des déplacement(s) du dispositif d'inspection à effectuer entre deux points d'intérêt successifs de la liste par la mise en œuvre d'un algorithme de minimisation des déplacements effectués en 1 dimension, 2 dimensions ou 3 dimensions, ladite minimisation étant réalisée en fonction des points de la liste et d'une enveloppe d'une surface du sous-châssis du véhicule ferroviaire.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue schématique d'un dispositif d'inspection dans un mode de réalisation de l'invention ;
- la figure 2 est une vue de la voie ferroviaire et des axes de référence dans un mode de réalisation de l'invention ;
- la figure 3 est un schéma fonctionnel d'un dispositif d'inspection dans un mode de réalisation de l'invention ;
- la figure 4 est un organigramme d'étapes mises en œuvre dans un mode de réalisation de l'invention ;
- la figure 5 est un organigramme d'étapes mises en œuvre dans un mode de réalisation de l'invention ;
- la figure 6 représente des déplacements effectués dans des modes de réalisation de l'invention.

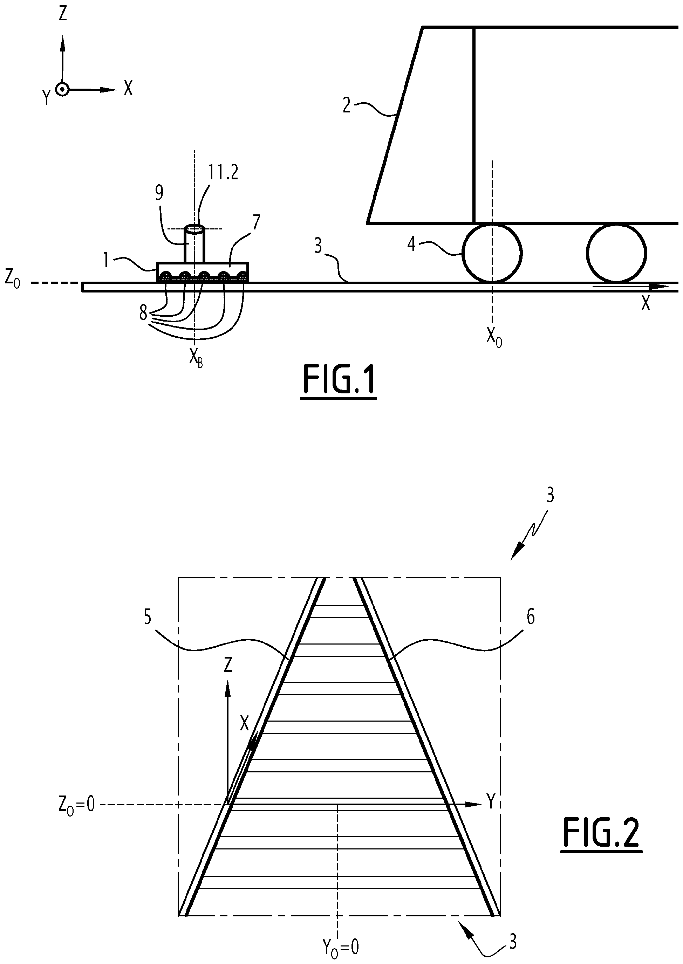

La figure 1 représente schématiquement un dispositif d'inspection 1, nommé encore robot 1, dans un mode de réalisation de l'invention. Le dispositif d'inspection 1 est adapté pour inspecter le châssis d'un véhicule ferroviaire 2, dans le cas considéré un train 2 (dans d'autres cas un tramway, une locomotive etc.), stationné sur une voie ferroviaire 3 qui s'étend le long d'un axe X. Comme représenté en figure 2, les rails 5 et 6 de la voie 3 se trouvent dans le plan défini par les axes orthogonaux X et Y, eux-mêmes perpendiculaires à un axe vertical Z.

Le dispositif d'inspection 1 comporte un chariot 7 doté de roues 8 et un bras 9. Quand le dispositif d'inspection 1 est placé sur entre les rails, par exemple les roues sur des pieds des rails 5 et 6, il est adapté pour rouler sur ces rails et ainsi se déplacer le long de l'axe X, mû par un système moteur mentionné plus loin. Le bras 9 est adapté pour se déployer ou se rétracter le long de l'axe Z et également le long de l'axe Y, sous l'action du système moteur. Au sommet du bras 9, un dispositif applicatif 11.2 est disposé. Dans le cas considéré, le dispositif applicatif est une caméra vidéo 11.2 (dans d'autres modes de réalisation, le dispositif applicatif comporte un appareil de mesures). Le dispositif d'inspection 1 est de dimensions adaptées pour circuler, entre les rails 5 et 6, sous le châssis du train 2, moyennant le repliement du bras selon l'axe Z, voire selon l'axe Y, selon les volumes du train sur le trajet du dispositif d'inspection 1.

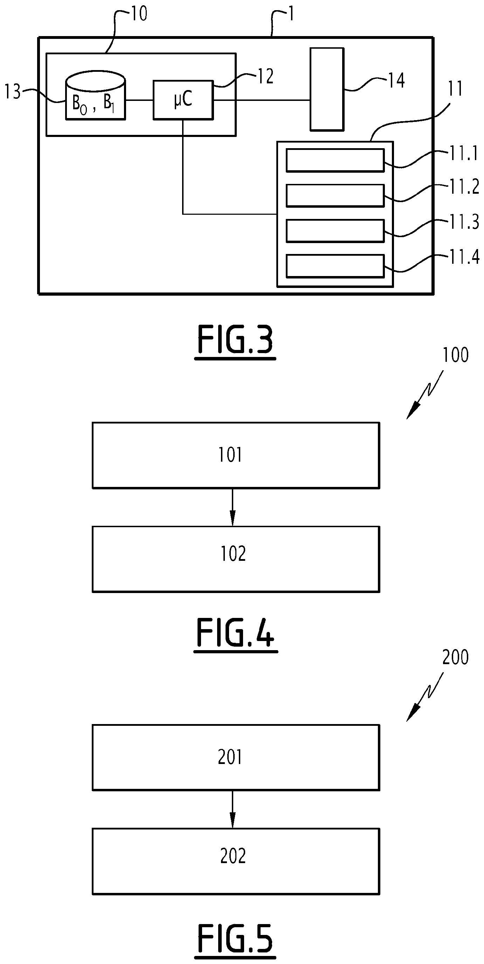

La figure 3 est un schéma fonctionnel du dispositif d'inspection 1 dans le mode de réalisation de l'invention considéré. Il comporte un bloc de traitement 10, un ensemble de systèmes 11 et une interface de télécommunication sans fil 13.

Le bloc de traitement 10 comporte un micro-processeur 12 et une zone mémoire 14. L'ensemble de systèmes 11 comporte notamment un système moteur 11.1, au moins un dispositif applicatif 11.2, ici une caméra vidéo 11.2, une batterie 11.3 et un système de géolocalisation 11.4.

Le système moteur 11.1 est adapté pour mettre en œuvre les mouvements du dispositif d'inspection 1, tant ceux du chariot 7 selon l'axe X, que ceux du bras 9 selon les axes Y et Z et que ceux d'inclinaison de la tête de caméra 11.2 par rapport à chacun des axes X, Y, Z.

La caméra vidéo 11.2 est adaptée pour capturer des images.

La batterie 11.3, par exemple électrique, est adaptée pour alimenter en énergie électrique l'ensemble du dispositif d'inspection 1.

Le système de géolocalisation 11.4 comporte par exemple une centrale inertielle avec 3 gyromètres et 3 accéléromètres. Il est adapté pour calculer la position courante du chariot 7, du bras 9 et l'orientation de la caméra 11.2.

L'interface de télécommunication sans fil 13 est par exemple de type WiFi adaptée pour échanger des données avec une station de supervision distante exploitée par un opérateur.

Le bloc de traitement 10 est adapté pour piloter les systèmes de l'ensemble de systèmes 11. Ainsi il est adapté pour envoyer des commandes aux différents systèmes de l'ensemble de systèmes 11, par exemple :
- envoi des commandes de mouvements à effectuer par le chariot 7, le bras 9 et la caméra 11.2 pour les positionner à une localisation déterminée ;
- envoi des commandes de capture d'images à la caméra vidéo 11.2.

Ces commandes sont par exemple reçues initialement par le bloc de traitement 10 via l'interface de télécommunication 13, en provenance de la station de supervision distante, avant d'être éventuellement complétées, traitées puis envoyées par le bloc de traitement 10 à l'ensemble de systèmes 11 : le dispositif d'inspection est alors en mode *manuel.* Ou encore, ces commandes font partie de séquences préprogrammées d'inspection enregistrées dans la zone mémoire 14 sous forme d'instructions logicielles, puis exécutées sur le micro-processeur 12 : le dispositif d'inspection est alors en mode *automatique.*

Le bloc de traitement 10 est également adapté pour recevoir et traiter les différentes données transmises par les différents systèmes de l'ensemble de systèmes 11 (par exemple les fichiers d'images capturées par la caméra 11.2, les positions courantes calculées par le système de géolocalisation 11.4 ...), pour les stocker ou encore pour, le cas échéant, les transmettre, directement ou après traitement, à destination de la station de supervision via l'interface 13.

Dans la mémoire 14, une base de données B₀ est stockée. Cette base de données B₀ comporte une liste des composants à inspecter du train 2 et comporte en outre, pour chaque composant, au moins les coordonnées de localisation du composant dans un référentiel qui a comme origine un point de référence P₀ du train 2, ainsi que des angles de roulis, tangage, lacet de la tête de caméra 11.2. Ces coordonnées sont par exemple exprimées dans un référentiel ayant pour axes les 3 axes X, Y, Z (correspondant aux axes indiqués ci-dessus qui sont aussi les axes respectivement, longitudinal, latéral et vertical du train 2).

Les coordonnées dans la base B₀ relatives à chaque composant sont suivant les modes de réalisation celles du composant ou celles de prise de vue du composant.

En référence à la figure 3, le bloc de traitement 10 est en outre adapté pour, dans un mode de détermination du point de référence, mettre en œuvre l'ensemble 100 d'étapes suivantes.

Dans un mode de réalisation, ces étapes 101, 102 sont mises en œuvre suite à l'exécution sur le micro-processeur 12, d'instructions logicielles stockées dans la zone mémoire 14.

Dans une étape 101 : déplacement du dispositif d'inspection 1 jusqu'à ce que ce dernier soit localisé comme se trouvant au niveau du point de référence P₀.

Dans une étape 102, le bloc de traitement 10 identifie alors la position courante (X₀, Y₀, Z₀) du dispositif d'inspection comme celle correspondant au point P₀ utilisé comme origine dans la base B₀ et l'enregistre comme telle. Et en outre, par exemple, il affecte à cette position P₀ les coordonnées (X₀ =0, Y₀ = 0, Z₀=0), soit l'origine du repère tridimensionnel comportant les axes X, Y et Z.

Dans le mode de réalisation considéré, le point P₀ correspond au point de coordonnées (X₀, Y₀, Z₀), où :
- X₀ sur l'axe X correspond au point de contact entre la roue de l'essieu avant et le rail, comme représenté en figure 1 ;
- Y₀ est sur la ligne centrale située entre les deux rails 5 et 6, soit à mi-distance de deux roues du train 2 se faisant face sur l'axe Y, comme représenté en figure 2 (par exemple déterminé de façon intrinsèque du fait d'une construction symétrique du dispositif d'inspection 1 selon l'axe Y); et
- Z₀ correspond à la limite supérieure du rail, comme représenté en figure 2.

En ferroviaire, les systèmes CAO utilisent couramment ce référentiel. Ainsi ils peuvent générer les encombrements des équipements sous châssis, directement exploitables par le robot. A défaut, le robot peut constituer ce référentiel au moyen d'un mode scanneur et de capteurs spécifiques. Dans un autre mode de réalisation, un autre référentiel peut être utilisé. La détermination du point de référence peut être effectuée en mode manuel ou automatique (mode « détermination du point de référence ») :
- de façon manuelle :
   - l'opérateur de la station de supervision fournit des commandes de déplacement au dispositif d'inspection 1 via l'interface 13 pour amener le dispositif 1 d'inspection au point de référence, et en fonction de ces commandes de déplacement, le bloc de traitement 10 commande au système moteur 11.1 un déplacement jusqu'à ce que le dispositif d'inspection 1 soit localisé comme se trouvant au niveau du point de référence P₀, ou alors
   - l'opérateur transporte le dispositif jusqu'au point de référence ;
- de façon automatique (par appui d'un bouton sur le dispositif 1 ou fourniture, depuis la station de supervision, de l'ordre correspondant au passage au mode de détermination automatique du point de référence), le dispositif d'inspection se déplace le long des rails, piloté par le bloc de traitement 10 jusqu'à reconnaître automatiquement par exemple la partie la plus basse de la première roue sur son côté gauche (par exemple par traitement automatique de reconnaissance de forme sur la base d'images fournies par la caméra 11.2). Et par exemple, si pour n'importe quelle raison, le dispositif d'inspection 1 ne réussit pas à identifier cette roue, la recherche sera stoppée après avoir avancé de 10 mètres(m) depuis une position de base (correspondant à la coordonnée X_{B} sur l'axe X, représentée en figure 1).

Après la réalisation des étapes de détermination du point de référence, le dispositif d'inspection 1 revient à sa position de base XB.

Dans le mode de réalisation décrit, dans l'étape 101, le dispositif d'inspection est déplacé jusqu'au point de référence. Dans d'autres modes de réalisation, le dispositif d'inspection est déplacé à l'étape 101 jusqu'à un point caractéristique (par exemple facilement détectable par recherche automatique sur image), puis détermine la position géographique du point de référence en fonction de celle de ce point caractéristique et d'informations stockées dans sa mémoire indiquant le delta entre ces deux positions géographiques.

Puis une fois ce processus de localisation du point de référence effectué, le dispositif d'inspection 1 est adapté, dans un « mode d'inspection », pour :
- effectuer les déplacements nécessaires pour se positionner successivement en chacun de certains au moins, voire la totalité, des composants du train 2 figurant dans la base B₀ en fonction des coordonnées du composant figurant dans la base B₀, et des angles de roulis, tangage, lacet de la caméra par rapport aux axes, X, Y, Z et de la position telle qu'enregistrée du point de référence P₀ à l'étape 102 (les déplacements sont stoppés pour mettre en place la mesure quand les déplacements requis sont jugés atteints en comparant les commandes de déplacements, définies en fonction des coordonnées des composants et de la position de référence enregistrées, aux positions courantes déterminées par le système de géolocalisation 11.4), et
- en chacun de ces différents emplacements, capturer des images à l'aide de la caméra 11.2 (ou effectuer en ces différents emplacements des mesures à l'aide de dispositifs de mesure) et effectuer sur ces images des traitements d'images pour fournir un statut d'inspection du composant, par exemple parmi OK, NOK, indéterminé, voire déterminer une caractérisation d'un défaut détecté sur le composant par traitement de ces images (la caractérisation comprend par exemple l'identification d'un type de défaut parmi fissure, usure, trou etc.).

Tous les points d'intérêt du train 2 à inspecter auront été référencés, dans une phase préalable, relativement au point de référence P₀, puis ils sont ensuite inspectés, les déplacements commandés par le bloc de traitement 10 étant alors déterminés relativement au point de référence P₀.

Ainsi dans une phase préalable à la première réalisation de l'ensemble d'étape 100, afin de constituer la base B₀, l'opérateur déplace successivement le chariot 7 selon X jusqu'à chaque composant de la liste considéré, positionne en outre le bras 9 selon Y et Z et oriente la caméra 11.2 conformément au point de vue désiré pour l'inspection dudit composant d'intérêt du train 2 (en se servant alors d'un train de gabarit similaire au train 2). Puis les coordonnées (x, y, z) et orientations relatives au composant sont alors enregistrées dans la base B₀ :
- x : distance longitudinale selon l'axe X entre la position courante et P₀ ;
- y : distance latérale selon l'axe Y entre la position courante et P₀ ;
- z : distance verticale selon l'axe Z entre la position courante et P₀ ;
- angles de roulis, de tangage, de lacet de la tête de caméra 11.2.

Ensuite, le dispositif d'inspection 1 pourra être utilisé pour inspecter automatiquement, en mode d'inspection, les composants du train 2 ou de tout train présentant des composants au même endroit que le train 2 par rapport à la position de référence retenue.

En « mode d'inspection », qu'il soit manuel ou automatique, l'inspection par le dispositif d'inspection comprend une liste de tâches à exécuter en différents emplacements du châssis du train. Selon comment ces tâches sont séquencées, la durée totale de l'inspection et la consommation d'énergie peuvent varier de manière significative.

Ainsi dans un mode de réalisation de l'invention, en référence à la figure 5, un ensemble d'étapes 200 est mis en œuvre.

Dans une étape 201, les tâches de la séquence de tâches à réaliser par le dispositif d'inspection 1 sont ordonnées dans un ordre minimisant dans le plan X, Y (étant donné que les mouvements selon Z sont pris en compte dans l'étape 202) le nombre et la distance de transition entre deux tâches successives, (par exemple, prendre des photos de composants) correspondant à deux emplacements successifs (x, y, z) du dispositif d'inspection (les algorithmes d'optimisation mis en œuvre sont par exemple similaires à ceux utilisés lors des calculs d'itinéraires routiers). Dans un mode de réalisation, le dispositif d'inspection 1 a un même point de départ et d'arrivée : X_{B}, mais ne repasse pas par X_{B} entre deux composants distincts de la liste.

Dans une étape 202, une minimisation des déplacements selon l'axe Z du bras entre deux tâches consécutives tout en évitant toute interférence avec le train 2, est réalisée.

Les étapes 201, 202 sont par exemple mises en œuvre dans le dispositif d'inspection 1, à l'aide du micro-processeur 12 et d'un algorithme d'optimisation de séquence stocké dans la mémoire 14. Les meilleures options pour le trajet d'inspection et les mouvements élémentaires du dispositif d'inspection 1 (tant du chariot 7 que du bras 9) sont ainsi calculées.

L'étape 202 est mise en œuvre en fonction d'une enveloppe statique du train (qui varie selon les formes en 3 dimensions des composants du train 2) qui représente la frontière, en hauteur (i.e. selon l'axe Z) au-delà de laquelle la limite supérieure de la caméra à l'extrémité du bras 9 ne peut pas aller, pour chaque position géographique (x, y) donnée dans le plan défini par les axes X et Y. Cette enveloppe délimite donc la surface d'au moins le sous-châssis du train 2.

Cette enveloppe statique du train est définie par exemple pour chaque type de véhicule ferroviaire, dans un fichier respectif de matrice en 3 dimensions, nommé B₁, stocké dans la mémoire 14. L'enveloppe (ou plafond) est fournie par le concepteur du train à l'aide de la CAO, ou fourni par le robot au moyen d'un mode scanneur automatisé et de capteurs dédiés.

Ainsi, après chaque identification de véhicule ferroviaire (réalisée automatiquement par le dispositif d'inspection 1, notamment par traitement d'image ou encore indiquée en mode manuel par l'opérateur au dispositif 1 depuis la station de supervision), le bloc de traitement 10 du dispositif d'inspection 1 sélectionne le fichier d'enveloppe statique correspondant au véhicule ferroviaire 2 identifié. Au cas où l'identification du véhicule ferroviaire est impossible, ou si le fichier d'enveloppe statique qui convient est absent ou inutilisable, une enveloppe par défaut correspondant à un gabarit statique de sécurité spécifié par l'exploitant (norme UIC par exemple) est utilisée.

Ces dispositions contribuent à réduire le temps et la consommation d'énergie nécessaires à l'accomplissement de la séquence d'inspection des véhicules ferroviaires.

A titre d'illustration et de comparaison, des étapes successives entre la fin de toute tâche (appelons la « tâche N-1 ») et celle de la tâche suivante (appelons la « tâche N »), l'ordonnancement des tâches ayant été obtenu suite à l'étape 201, sont décrites ci-après, tout d'abord dans un mode de réalisation sans utilisation de la matrice d'enveloppe, dans les étapes 301 à 309, et puis dans un mode de réalisation avec utilisation de la matrice d'enveloppe, dans les étapes 401 à 408.

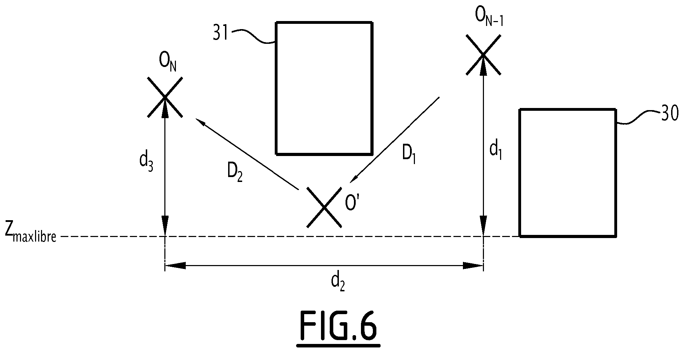

La figure 6 représente dans le plan des axes X et Z l'emplacement O_{N-1} de coordonnées (x_{N-1}, y_{N-1}, z_{N-1}) correspondant à la tâche N-1, l'emplacement O_{N} de coordonnées (x_{N}, y_{N}, z_{N}) correspondant à la tâche N et les composants 30 et 31 du train figurant à proximité. La tâche N-1 est par exemple la prise d'une photo du composant 31 et la tâche N est par exemple la prise d'une photo du composant (non représenté) situé plus loin selon l'axe X.
- Etape 301 : fin de la tâche N-1 à l'emplacement O_{N-1}.
- Etape 302 : baisser le bras 9 à la hauteur z=Z_{maxlibre} (hauteur du plus bas élément du train 2), comme représenté par la flèche d₁ en figure 6.
- Etape 303 : centrer le bras 9 entre les deux rails 5 et 6 (y=0).
- Etape 304 : déplacer le chariot 7 sur l'axe X jusqu'à l'emplacement x_{N} selon X correspondant à la tâche N, comme représenté par la flèche d₂ en figure 6.
- Etape 305 : positionner le bras latéralement, i.e. sur l'axe Y, jusqu'à l'emplacement y_{N} selon Y correspondant à la tâche N.
- Etape 306 : positionner le bras verticalement, i.e. sur l'axe Z, jusqu'à l'emplacement z_{N} selon Z correspondant à la tâche N, comme représenté par la flèche d₃ en figure 6.
- Etape 307 : orienter la tête de la caméra 11.2.
- Etape 308 : exécuter la tâche N (capture images, mesure ...).
- Etape 309 : fin de la tâche N ; N = N+1 ; retour à l'étape 301 si la séquence des tâches n'est pas terminée.

Ainsi à l'étape 302, le bras est systématiquement baissé en-dessous de la hauteur du plus bas élément du train 2).
- Etape 401 : fin de la tâche N-1.
- Etape 402 : déterminer s'il y a intersection selon l'axe Z avec le train 2 pour aller directement de l'emplacement O_{N-1}, de coordonnées (x_{N-1}, y_{N-1}, z_{N-1}) correspondant à la tâche N-1, à l'emplacement O_{N}, de coordonnées (x_{N}, y_{N}, z_{N}) correspondant à la tâche N, en fonction du segment entre (x_{N-1}, y_{N-1}, z_{N-1}) et (x_{N}, y_{N}, z_{N}) et du fichier d'enveloppe B₁ de l'enveloppe correspondant au train 2 inspecté. Si oui, aller à l'étape 403 ; si non, aller à l'étape 405 directement.
- Etape 403 : déterminer une position intermédiaire O' (ou plusieurs) telle qu'on puisse aller de O_{N-1} à O', puis de O' à O_{N} en minimisant la distance totale parcourue (en 3 dimensions) en allant sur l'axe X de x_{N-1} à x_{N}, en fonction du fichier d'enveloppe B₁ correspondant au train 2 inspecté.
- Etape 404 : déplacer le chariot 7 (selon X) et le bras 9 (selon Z) jusqu'à la position intermédiaire O', conformément au déplacement indiqué par la flèche D₁ sur la figure 6.
- Etape 405 : déplacer le chariot 7 et le bras 9 de la position courante jusqu'à O_{N} selon l'axe indiqué par la flèche D₂ en figure 6.
- Etape 406 : orienter la tête de la caméra 11.2.
- Etape 407 : exécuter la tâche N (capture images, mesure ...).
- Etape 408 : fin de la tâche N ; N = N+1 ; retour à l'étape 301 si la séquence des tâches n'est pas terminée.
La somme des distances représentées par les flèches d₁, d₂ et d₃ se monte à d₁ + d₂ + d₃ = 200+2500+180 = 2880 millimètres (mm), et est parcourue dans le cas considéré en 14 secondes (s). La somme des distances représentées par les déplacements le long des flèches D₁ et D₂ se monte à D₁ + D₂ = 1266 + 1262 = 2528 mm, et est parcouru dans le cas considéré en 12 s.

## Revendications

1. Procédé d'inspection de sous-châssis de véhicule ferroviaire (2) sur une voie ferroviaire (3) à l'aide d'un dispositif d'inspection (1) comprenant un bloc de traitement (10) et un système moteur (11.1), ledit bloc de traitement étant adapté pour commander le système moteur et le système moteur étant adapté pour déplacer le dispositif d'inspection jusqu'à le positionner en au moins un point de destination commandé par le bloc de traitement ;
ledit procédé étant **caractérisé en ce que**, étant donné une liste, mémorisée dans le bloc de traitement, de coordonnées de points d'intérêt du sous-châssis exprimées dans un référentiel ayant comme origine un point de référence, le procédé comprend les étapes suivantes :
- déplacement du dispositif d'inspection jusqu'à un point prédéterminé dont la position par rapport au point de référence est connue ;
- enregistrement, par le bloc de traitement, de la localisation du point de référence en fonction de la position jusqu'à laquelle le dispositif a été déplacé ;
- détermination, par le bloc de traitement, d'au moins une commande destinée au système moteur pour positionner le dispositif d'inspection en au moins un point d'intérêt de la liste en fonction d'au moins les coordonnées dudit point d'intérêt exprimées dans la liste et de ladite localisation du point de référence enregistrée.

2. Procédé d'inspection de sous-châssis de véhicule ferroviaire (2) selon la revendication 1, selon lequel le bloc de traitement (10) fournit ladite commande déterminée au système moteur (11.1), puis, en fonction de ladite commande, le dispositif d'inspection se déplace sous l'action du système moteur jusqu'au point d'intérêt et en capture une image ou y effectue une mesure.

3. Procédé d'inspection de sous-châssis de véhicule ferroviaire (2) selon la revendication 1 ou 2, selon lequel le point prédéterminé est un essieu du véhicule ferroviaire, la localisation du point de référence sur un axe X s'étendant parallèlement à la voie (3) étant celle correspondant audit essieu sur l'axe X, la localisation du point de référence sur un axe Y situé dans le plan de la voie et perpendiculaire à des rails (5,6) de la voie étant déterminée en fonction de la localisation d'au moins un des deux rails sur l'axe Y et la localisation du point de référence sur un axe Z perpendiculaire aux axes X et Y étant déterminée en fonction de la localisation d'au moins un des deux rails sur l'axe Z.

4. Procédé d'inspection de sous-châssis de véhicule ferroviaire (2) selon l'une quelconque des revendications précédentes, selon lequel les étapes suivantes sont mises en œuvre :
- calcul d'une enveloppe d'une surface du sous-châssis du véhicule ferroviaire ;
- détermination de déplacement(s) du dispositif d'inspection (1) à effectuer entre deux points d'intérêt successifs de la liste par la mise en œuvre d'un algorithme de minimisation des déplacements effectués en 1 dimension, 2 dimensions ou 3 dimensions, ladite minimisation étant réalisée en fonction des points de la liste et de l'enveloppe calculée.

5. Programme d'ordinateur comportant des instructions logicielles qui, lorsqu'elles sont exécutées par un ordinateur, mettent en œuvre un procédé selon l'une quelconque des revendications précédentes.

6. Dispositif d'inspection (1) de sous-châssis de véhicule ferroviaire (2) sur une voie ferroviaire (3) comprenant un bloc de traitement (10) et un système moteur (11.1), ledit bloc de traitement étant adapté pour commander le système moteur et le système moteur étant adapté pour déplacer le dispositif d'inspection jusqu'à le positionner en au moins un point de destination commandé par le bloc de traitement ;
ledit dispositif étant **caractérisé en ce que**, étant donné une liste, mémorisée dans le bloc de traitement, de coordonnées de points d'intérêt du sous-châssis exprimées dans un référentiel ayant comme origine un point de référence, le bloc de traitement est adapté pour, suite à un déplacement du dispositif d'inspection jusqu'à un point prédéterminé dont la position par rapport au point de référence est connue, enregistrer une localisation du point de référence en fonction de la position jusqu'à laquelle le dispositif a été déplacé ;
le bloc de traitement étant adapté pour déterminer au moins une commande destinée au système moteur pour positionner le dispositif d'inspection en au moins un point d'intérêt de la liste en fonction d'au moins les coordonnées dudit point d'intérêt exprimées dans la liste et de ladite localisation du point de référence enregistrée.

7. Dispositif d'inspection (1) de sous-châssis de véhicule ferroviaire (2) selon la revendication 6, dans lequel le bloc de traitement (10) est adapté pour fournir ladite commande déterminée au système moteur (11.1), puis, en fonction de ladite commande, le dispositif d'inspection est adapté pour se déplacer sous l'action du système moteur jusqu'au point d'intérêt et en capturer une image ou y effectuer une mesure.

8. Dispositif d'inspection (1) de sous-châssis de véhicule ferroviaire (2) selon la revendication 6 ou 7, dans lequel le point prédéterminé est un essieu du véhicule ferroviaire, la localisation du point de référence sur un axe X s'étendant parallèlement à la voie (3) étant celle correspondant audit essieu sur l'axe X, la localisation du point de référence sur un axe Y situé dans le plan de la voie et perpendiculaire à des rails de la voie étant déterminée en fonction de la localisation d'au moins un des deux rails (5, 6) sur l'axe Y et la localisation du point de référence sur un axe Z perpendiculaire aux axes X et Y étant déterminée en fonction de la localisation d'au moins un des deux rails sur l'axe Z.

9. Dispositif d'inspection (1) de sous-châssis de véhicule ferroviaire selon l'une quelconque des revendications 6 à 8, dans lequel le bloc de traitement (10) est adapté pour déterminer des déplacement(s) du dispositif d'inspection à effectuer entre deux points d'intérêt successifs de la liste par la mise en œuvre d'un algorithme de minimisation des déplacements effectués en 1 dimension, 2 dimensions ou 3 dimensions, ladite minimisation étant réalisée en fonction des points de la liste et d'une enveloppe d'une surface du sous-châssis du véhicule ferroviaire.

## Patentansprüche

1. Verfahren zum Überprüfen eines Untergestells eines Schienenfahrzeugs (2) auf einem Schienenweg (3) mithilfe einer Inspektionsvorrichtung (1), die einen Verarbeitungsblock (10) und ein Motorsystem (11.1) umfasst, wobei der Verarbeitungsblock angepasst ist, das Motorsystem zu steuern, und das Motorsystem angepasst ist, die Inspektionsvorrichtung, gesteuert von dem Verarbeitungsblock, zu bewegen, bis sie an mindestens einem Zielpunkt positioniert ist;
wobei das Verfahren in Anbetracht einer in dem Verarbeitungsblock gespeicherten Liste von Koordinaten von interessierenden Punkten des Untergestells, die in einem Koordinatensystem mit einem Referenzpunkt als Ursprung ausgedrückt sind, **dadurch gekennzeichnet ist, dass** das Verfahren die folgenden Schritte umfasst:
- Bewegen der Inspektionsvorrichtung bis zu einem vorbestimmten Punkt, dessen Position in Bezug auf den Referenzpunkt bekannt ist;
- Aufzeichnen der Lage des Referenzpunktes durch den Verarbeitungsblock abhängig von der Position, bis zu der die Vorrichtung bewegt wurde;
- Ermitteln mindestens eines Befehls für das Motorsystem durch den Verarbeitungsblock, um die Inspektionsvorrichtung an mindestens einem interessierenden Punkt der Liste abhängig von mindestens den Koordinaten des interessierenden Punktes, die in der Liste ausgedrückt sind, und der Lage des aufgezeichneten Referenzpunktes zu positionieren.

2. Verfahren zum Überprüfen eines Untergestells eines Schienenfahrzeugs (2) nach Anspruch 1, nach dem der Verarbeitungsblock (10) den ermittelten Befehl an das Motorsystem (11.1) liefert, dann die Inspektionsvorrichtung sich unter der Wirkung des Motorsystems abhängig von dem Befehl bis zu dem interessierenden Punkt bewegt und dort ein Bild aufnimmt oder dort eine Messung ausgeführt.

3. Verfahren zum Überprüfen eines Untergestells eines Schienenfahrzeugs (2) nach Anspruch 1 oder 2, nach dem der vorbestimmte Punkt eine Achse des Schienenfahrzeugs ist, wobei die Lage des Referenzpunktes auf einer X Achse, die sich parallel zu dem Schienenweg (3) erstreckt, derjenigen der Achse auf der X Achse entspricht, die Lage des Referenzpunktes auf einer Y Achse, die in der Ebene des Schienenwegs und senkrecht zu den Schienen (5, 6) des Schienenwegs liegt, abhängig von der Lage von mindestens einer der zwei Schienen auf der Y-Achse bestimmt wird und die Lage des Referenzpunktes auf der Z Achse senkrecht zu den X und Y Achsen abhängig von der Lage mindestens einer der zwei Schienen auf der Z Achse bestimmt wird.

4. Verfahren zum Überprüfen eines Untergestells eines Schienenfahrzeugs (2) nach einem beliebigen der vorhergehenden Ansprüche, nach dem die folgenden Schritte durchgeführt werden:
- Berechnen einer Umhüllung einer Fläche des Untergestells des Schienenfahrzeugs;
- Bestimmen der Bewegung(en) der Inspektionsvorrichtung (1), die zwischen zwei aufeinanderfolgenden interessierenden Punkte der Liste durchzuführen ist (sind), durch Ausführen eines Algorithmus der Minimierung der durchgeführten Bewegungen in einer Dimension, zwei Dimensionen oder drei Dimensionen, wobei die Minimierung abhängig von den Punkten der Liste und der berechneten Umhüllung realisiert wird.

5. Computerprogramm, das Softwarebefehle aufweist, die, wenn sie von einem Computer ausgeführt werden, ein Verfahren nach einem beliebigen der vorhergehenden Ansprüche durchführen.

6. Inspektionsvorrichtung (1) für ein Untergestell eines Schienenfahrzeugs (2) auf einem Schienenweg (3), die einen Verarbeitungsblock (10) und einem Motorsystem (11.1) umfasst, wobei der Verarbeitungsblock angepasst ist, das Motorsystem zu steuern, und das Motorsystem angepasst ist, die Inspektionsvorrichtung, gesteuert von dem Verarbeitungsblock, zu bewegen, bis sie an einem interessierenden Punkt positioniert ist;
wobei die Vorrichtung **dadurch gekennzeichnet ist, dass** in Anbetracht einer in dem Verarbeitungsblock gespeicherten Liste von Koordinaten von interessierenden Punkten des Untergestells, die in einem Koordinatensystem mit einem Referenzpunkt als Ursprung ausgedrückt sind, der Verarbeitungsblock angepasst ist, nach einer Bewegung der Inspektionsvorrichtung bis zu einem vorbestimmten Punkt, dessen Position in Bezug auf den Referenzpunkt bekannt ist, eine Lage des Referenzpunktes abhängig von der Position, bis zu der die Vorrichtung bewegt wurde, aufzuzeichnen;
der Verarbeitungsblock angepasst ist, mindestens einen Befehl für das Motorsystem zu ermitteln, um die Inspektionsvorrichtung an mindestens einem interessierenden Punkt der Liste abhängig von mindestens den in der Liste ausgedrückten Koordinaten des interessierenden Punktes und der Lage des aufgezeichneten Referenzpunktes zu positionieren.

7. Inspektionsvorrichtung (1) für ein Untergestell eines Schienenfahrzeugs (2) auf einem Schienenweg (3) nach Anspruch 6, bei der der Verarbeitungsblock (10) angepasst ist, den ermittelten Befehl an das Motorsystem (11.1) zu liefern, dann die Inspektionsvorrichtung angepasst ist, abhängig von dem Befehl sich unter der Wirkung des Motorsystems bis zu dem interessierenden Punkt zu bewegen und dort ein Bild aufzunehmen oder dort eine Messung durchzuführen.

8. Inspektionsvorrichtung (1) für ein Untergestell eines Schienenfahrzeugs (2) auf einem Schienenweg (3) nach Anspruch 6 oder 7, bei der der vorbestimmte Punkt eine Achse des Schienenfahrzeugs ist, wobei die Lage des Referenzpunktes auf einer X Achse, die sich parallel zu dem Schienenweg (3) erstreckt, derjenigen der Achse auf der X Achse entspricht, die Lage des Referenzpunktes auf einer Y Achse, die in der Ebene des Schienenwegs und senkrecht zu den Schienen (5, 6) des Schienenwegs liegt, abhängig von der Lage von mindestens einer der zwei Schienen auf der Y-Achse bestimmt wird und die Lage des Referenzpunktes auf der Z Achse senkrecht zu den X und Y Achsen abhängig von der Lage von mindestens einer der zwei Schienen auf der Z Achse bestimmt wird.

9. Inspektionsvorrichtung (1) für ein Untergestell eines Schienenfahrzeugs (2) auf einem Schienenweg (3) nach einem beliebigen der Ansprüche 6 bis 8, bei der der Verarbeitungsblock (10) angepasst ist, die Bewegung(en) der Inspektionsvorrichtung (1), die zwischen zwei aufeinanderfolgenden interessierenden Punkte der Liste durchzuführen ist (sind), durch Ausführen eines Algorithmus der Minimierung der durchgeführten Bewegungen in einer Dimension, zwei Dimensionen oder drei Dimensionen zu ermitteln, wobei die Minimierung abhängig von den Punkten der Liste und der Umhüllung einer Fläche des Untergestells des Schienenfahrzeugs realisiert wird.

## Claims

1. A railway vehicle underframe inspection method for inspecting the underframe of a railway vehicle (2) on a railway track (3) by means of an inspection device (1) including a processing block (10) and a motor system (11.1), the said processing block being adapted so as to command and control the motor system and the motor system being adapted so as to move the inspection device until it is positioned at least at one destination point commanded and controlled by the processing block;
the said method being **characterised in that**, given a list, which is saved and stored in the processing block, of coordinates of points of interest of the underframe expressed in a reference frame having as origin a reference point, the method includes the following steps:
- moving of the inspection device up to a predetermined point whose position relative to the reference point is known;
- recording and saving, by the processing block, of the location of the reference point as a function of the position up to which the device has been moved;
- determining, by the processing block, of at least one command intended to be sent to the motor system in order to position the inspection device at least at one point of interest from the list on the basis of at least the coordinates of the said point of interest expressed in the list and of the said recorded and saved location of the reference point.

2. A railway vehicle underframe inspection method (2) according to claim 1, wherein the processing block (10) supplies the said command determined to the motor system (11.1), and then, on the basis of the said command, the inspection device moves as a result of the action of the motor system up to the point of interest and captures an image thereof or performs a measurement thereat.

3. A railway vehicle underframe inspection method (2) according to claim 1 or 2, wherein the predetermined point is an axle of the railway vehicle, the location of the reference point on an axis X extending parallelly to the track (3) being the one corresponding to the said axle on the axis X, the location of the reference point on an axis Y situated in the plane of the track and perpendicular to the rails (5, 6) of the track being determined as a function of the location of at least one of the two rails on the axis Y and the location of the reference point on an axis Z perpendicular to the axes X and Y being determined as a function of the location of at least one of the two rails on the axis Z.

4. A railway vehicle underframe inspection method (2) according to any one of the preceding claims, wherein the following steps are operationally implemented:
- calculation of an envelope of a surface of the underframe of the railway vehicle;
- determination of movement(s) of the inspection device (1) to be brought about between two successive points of interest of the list by means of implementation of a minimisation algorithm for minimising the movements brought about in 1 dimension, 2 dimensions or 3 dimensions, the said minimisation being carried out on the basis of the points of the list and of the envelope calculated.

5. A computer program comprising of software instructions which, when they are executed by a computer, operationally implement a method as claimed in any one of the preceding claims.

6. A railway vehicle underframe inspection device (1) for inspecting the underframe of a railway vehicle (2) on a railway track (3) including a processing block (10) and a motor system (11.1), the said processing block being adapted so as to command and control the motor system, and the motor system being adapted so as to move the inspection device until it is positioned at least at one destination point commanded and controlled by the processing block;
the said device being **characterised in that**, given a list, which is saved and stored in the processing block, of coordinates of points of interest of the underframe expressed in a frame of reference having as origin a reference point, the processing block is adapted so as to, following a movement of the inspection device up to a predetermined point whose position relative to the reference point is known, record and save a location of the reference point as a function of the position up to which the device has been moved;
the processing block being adapted so as to determine at least one command intended to be sent to the motor system in order to position the inspection device at least at one point of interest from the list on the basis of at least the coordinates of the said point of interest expressed in the list and the recorded and saved location of the reference point.

7. A railway vehicle underframe inspection device (1) for inspecting the underframe of a railway vehicle (2) according to claim 6, wherein the processing block (10) is adapted so as to supply the said command determined to the motor system (11.1), and then, on the basis of the said command, the inspection device is adapted so as to move as a result of the action of the motor system up to the point of interest and capture an image thereof or perform a measurement thereat.

8. A railway vehicle underframe inspection device (1) for inspecting the underframe of a railway vehicle (2) according to claim 6 or claim 7, wherein the predetermined point is an axle of the railway vehicle, the location of the reference point on an axis X extending parallelly to the track (3) being the one corresponding to the said axle on the axis X, the location of the reference point on an axis Y situated in the plane of the track and perpendicular to the rails of the track being determined as a function of the location of at least one of the two rails (5, 6) on the axis Y and the location of the reference point on an axis Z perpendicular to the Axes X and Y being determined as a function of the location of at least one of the two rails on the axis Z.

9. A railway vehicle underframe inspection device (1) for inspecting the underframe of a railway vehicle (2) according to any one of claims 6 to 8, wherein the processing block (10) is adapted so as to determine the movement(s) of the inspection device to be brought about between two successive points of interest of the list by means of implementation of a minimisation algorithm for minimising the movements brought about in 1 dimension, 2 dimensions or 3 dimensions, the said minimisation being carried out on the basis of the points of the list and of an envelope of a surface of the underframe of the railway vehicle.
